# FASCICULE DE BREVET EUROPEEN

(11) **EP 3 693 225 B1**
(45) Date de publication et mention de la délivrance du brevet: **14.04.2021**
(21) Numéro de dépôt: 20156408.5
(22) Date de dépôt: 10.02.2020
(51) Int. Cl.: B60R 11/02, B60N 3/00, B64D 11/00

(54) **DISPOSITIF DE CONFORT, NOTAMMENT DESTINÉ À ÉQUIPER UN VÉHICULE DE TRANSPORT PUBLIC**
KOMFORTVORRICHTUNG, INSBESONDERE FÜR ÖFFENTLICHE VERKEHRSMITTEL
COMFORT DEVICE, IN PARTICULAR FOR EQUIPPING A PUBLIC TRANSPORT VEHICLE

(30) Priorité: 11.02.2019 FR 1901352
(43) Date de publication de la demande: 12.08.2020
(73) Titulaire: ALSTOM Transport Technologies, 93400 Saint-Ouen (FR)
(72) Inventeur: MIGLIANICO, Denis, 69160 TASSIN (FR); DA COSTA, Antonio, 94340 JOINVILLE LE PONT (FR); BARBA, Joffrey, 13002 MARSEILLE (FR)
(74) Mandataire: Lavoix

(56) Documents cités:
- WO-A1-2016/076921
- DE-A1-102012 109 382
- FR-A1- 2 997 908
- US-A1- 2005 178 297
- US-A1- 2007 283 855

## Description

La présente invention concerne un dispositif de confort pour un utilisateur, notamment destiné à équiper un véhicule de transport public, par exemple un véhicule ferroviaire, le dispositif de confort comprenant une tablette rabattable, articulée autour d'une première liaison pivot entre une position rabattue et une position d'utilisation, la première liaison pivot est formée par des roues libres débrayables. Un tel dispositif de confort est connu de l'état de la technique des véhicules de transport public, dans lesquels la tablette est mobile uniquement entre une position d'utilisation horizontale et une position rabattue formant un angle de 90° avec l'horizontale.

Cependant, un tel dispositif ne permet pas de s'adapter à tous les utilisateurs. En effet, chacun présente une taille différente et par conséquent les bras et les yeux ne sont pas situés à la même hauteur chez tous les utilisateurs. Ainsi, un utilisateur souhaitant lire un livre ou consulter un appareil électronique portable en utilisant une telle tablette présentera rapidement des signes d'inconfort, tels que des raideurs dans la nuque, si celle-ci n'est pas adaptée à sa vision.

DE 10 2012 109382, qui divulgue un dispositif de confort selon le préambule de la revendication 1, décrit une tablette de siège de voiture articulée autour d'une première liaison pivot entre une position rabattue et une position d'utilisation, la première liaison pivot étant formée par des roues libres débravables.

US 2007/283855 décrit une tablette de siège de véhicule, comprenant un support embarqué sur sa face supérieure.

L'un des buts de l'invention est de pallier les inconvénients décrits ci-dessus en fournissant un dispositif de confort offrant à tout utilisateur un confort de lecture ou de consultation d'appareils électroniques portables pendant son trajet.

A cet effet, l'invention a pour objet un dispositif de confort pour un utilisateur selon la revendication 1.

Un tel dispositif de confort présente en outre l'avantage d'offrir une stabilité de la tablette en position d'utilisation et une résistance à l'usure accrues par rapport aux dispositifs de confort connus de l'état de la technique.

Le dispositif de confort selon l'invention peut comprendre l'une ou plusieurs des caractéristiques suivantes, prises seules ou selon toutes combinaisons techniquement envisageables :
la tablette en position d'utilisation forme un angle compris entre 0° et 110° par rapport à la tablette en position rabattue ;
le support embarqué présente un bord de réception d'une partie inférieure de l'accessoire de l'utilisateur ;
le support embarqué en position inclinée forme un angle compris entre 0° et 60° avec la tablette en position rabattue ;
la deuxième liaison pivot comporte des éléments de frottement.

L'invention concerne également une voiture de véhicule de transport public comprenant au moins un dispositif de confort selon l'invention.

Selon un mode de réalisation particulier, la voiture présente la caractéristique suivante : chaque dispositif de confort comporte un premier support vertical et un second support vertical, agencés l'un en regard de l'autre, et délimitant entre eux un espace d'accueil pour un passager, et les premier et second supports verticaux sont montés sur un organe de guidage horizontal.

L'invention sera mieux comprise à la lecture de la description qui va suivre, donnée uniquement à titre d'exemple et faite en se référant aux dessins sur lesquels :
la figure 1 est une vue en coupe axiale d'une voiture de véhicule de transport public selon un exemple de mode de réalisation de l'invention ;
la figure 2 et la figure 3 représentent un dispositif de confort équipant la voiture de la figure 1, dans deux configurations respectives ;
la figure 4 est une vue schématique éclatée de la tablette rabattable du dispositif de confort équipant la voiture de la figure 1 ; et
la figure 5 est une vue schématique éclatée de la première liaison pivot du dispositif de confort équipant la voiture de la figure 1.

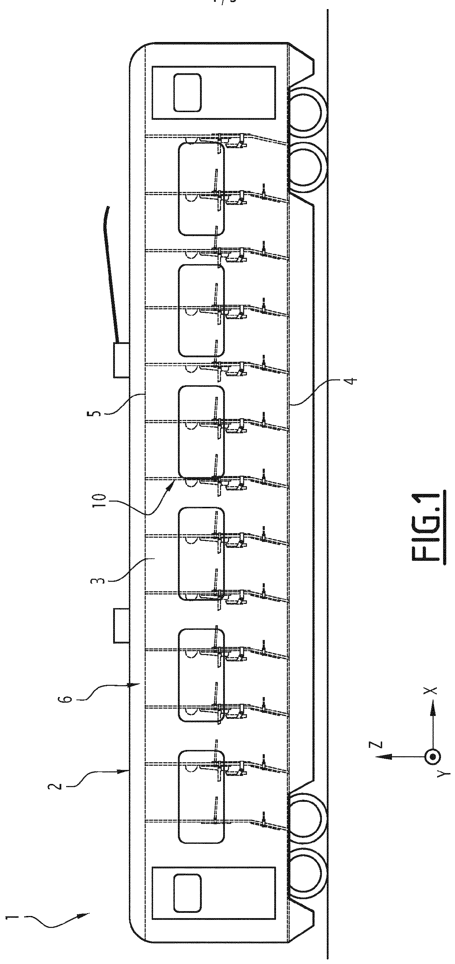

On a représenté, sur la figure 1, une voiture 1 de véhicule de transport public, et plus particulièrement de véhicule ferroviaire.

La voiture 1 comporte une caisse 2 formée par deux parois latérales 3, un sol 4 et un plafond 5.

La voiture 1 comporte une salle 6 de voyageurs, s'étendant dans une direction longitudinale X. Une telle salle présente généralement une longueur d'environ de 12 mètres (m) à 15m et une largeur d'environ 2,8m à 3m, la longueur étant considérée dans la direction longitudinale X et la largeur dans une direction transversale Y perpendiculaire à la direction longitudinale X.

Il est à noter que la structure de la voiture 1 est classique et connue en soi. Une telle voiture 1 présente par exemple une longueur environ égale à 17,3 mètres.

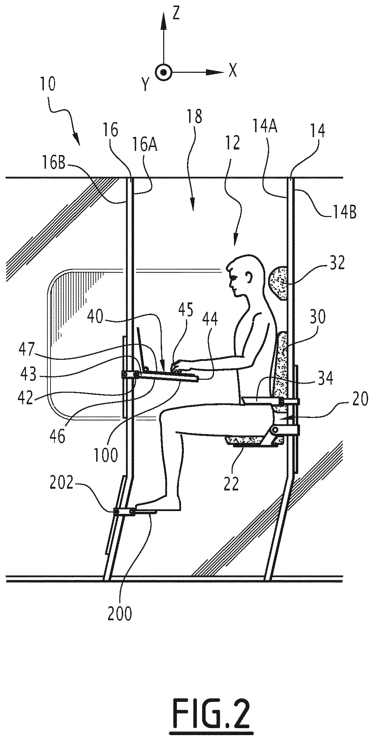

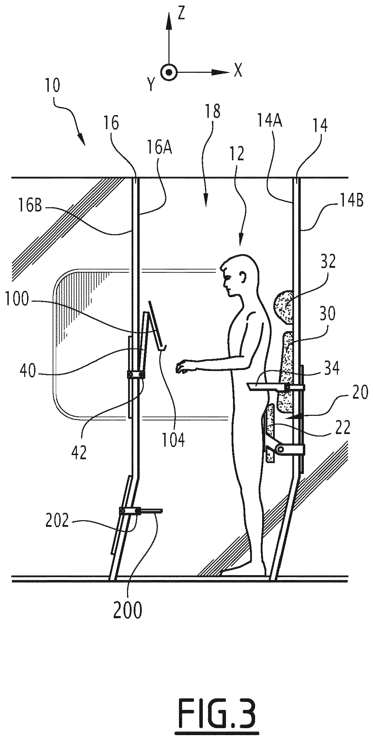

La salle 6 est équipée d'une pluralité de dispositifs de confort 10, chacun destiné à accueillir un passager 12. Un tel dispositif de confort 10 est représenté plus en détail sur les figures 2 et 3. Tous les dispositifs de confort 10 sont de préférence sensiblement identiques. En d'autres termes, la salle 6 est de préférence dépourvue de dispositif de confort présentant une structure générale différente de celle décrite ci-dessous.

Chaque dispositif de confort 10 comporte un premier support vertical 14 et un second support vertical 16, agencés l'un en regard de l'autre, et délimitant entre eux un espace d'accueil 18 pour le passager 12.

Avantageusement, la distance entre les premier 14 et second 16 supports verticaux est comprise entre 700 millimètre (mm) et 800 mm, par exemple égale à 750 mm. Dans ce cas, chacun des premier 14 et second 16 supports est fixé au sol 4 de la salle 6, et s'étend dans une direction verticale Z perpendiculaire aux directions longitudinale X et transversale Y. Avantageusement, les premier 14 et second 16 supports verticaux sont montés chacun sur un organe de guidage horizontal. Cet organe de guidage horizontal est mobile le long de liaisons glissière portées par exemple par les parois latérales 3.

Le premier support vertical 14 présente une face intérieure 14A, tournée vers l'espace d'accueil 18, et une face extérieure 14B tournée à l'opposé. De même, le second support vertical 16 comporte une face intérieure 16A tournée vers l'espace d'accueil 18, et une face extérieure 16B tournée à l'opposé.

Le premier support vertical 14 comporte, du côté de sa face intérieure 14A, un siège 20 comprenant une assise rabattable 22.

Le siège 20 comporte par ailleurs un dossier 30, relié au premier support vertical 14.

Avantageusement, le siège 20 comporte également un appuie-tête 32, relié éventuellement au premier support vertical 14.

Avantageusement, le siège 20 comporte également au moins un accoudoir 34.

Le second support vertical 16 comporte, du côté de sa face intérieure 16A, une tablette 40 rabattable, reliée par une première liaison pivot 42 au second support vertical 16. La première liaison pivot 42 autorise le pivotement de la tablette 40 entre une position de tablette rabattue, comme visible sur la figure 3, et une position d'utilisation de tablette, comme visible sur la figure 2.

En position d'utilisation, la tablette 40 s'étend dans la direction longitudinale X.

La tablette 40 s'étend entre une extrémité liée 43 à la première liaison pivot 42 et une extrémité libre 44 opposée à l'extrémité liée 43.

La tablette 40 comprend une face supérieure 45 destinée à recevoir un accessoire de l'utilisateur, par exemple un ordinateur portable, une tablette numérique, un livre, etc., et une face inférieure 46 opposée à la face supérieure 45.

Chaque face 45, 46 est délimitée dans la direction transversale Y par un flanc 47.

La tablette 40 présente par exemple une longueur selon la direction longitudinale X comprise entre 200 mm et 350 mm.

La tablette 40 présente par exemple une largeur selon la direction transversale Y comprise entre 300mm et 450mm.

Selon un exemple, la tablette 40 est réalisée en métal. Par exemple, la tablette 40 est réalisée en aluminium ou en magnésium. Selon un autre exemple, la tablette 40 est réalisée en matériau composite.

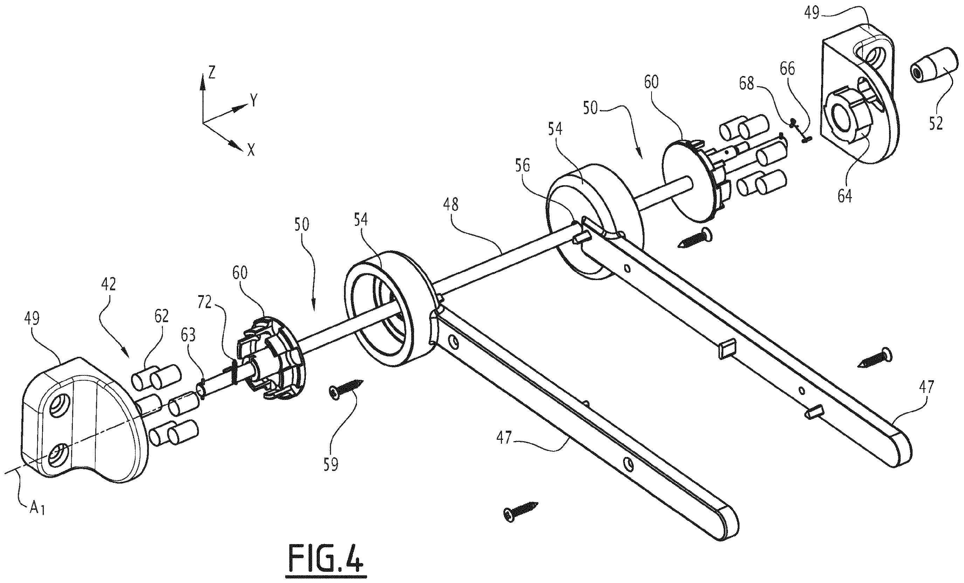

Selon l'exemple de réalisation représenté sur la figure 4, la première liaison pivot 42 est articulée autour d'un premier axe de rotation transversal A1. Le premier axe de rotation est par exemple matérialisé par une tige 48.

Par exemple, la première liaison pivot 42 est montée sur des pièces de fixation 49 de la tablette 40 au second support vertical 16.

Par exemple, les pièces de fixation 49 sont montées sur un organe de guidage vertical mobile le long d'une liaison glissière verticale portée par le second support vertical 16, de sorte que la hauteur de la tablette 40 peut être adaptée à la taille de l'utilisateur 12 et/ou à la position qu'il souhaite adopter.

En position d'utilisation, la tablette 40 forme par exemple un angle compris entre 0° et 110° par rapport à la tablette 40 en position rabattue.

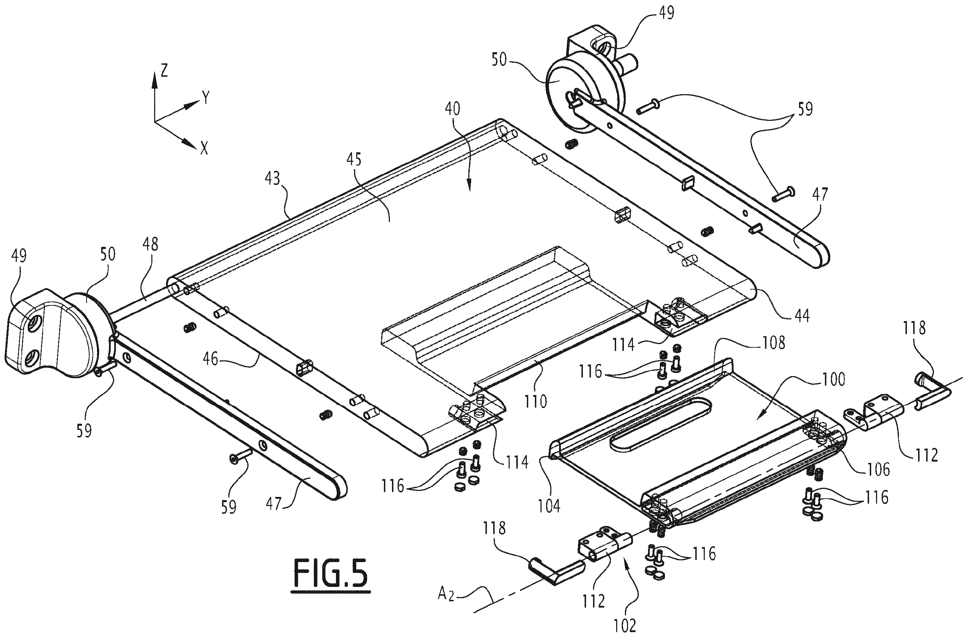

La première liaison pivot 42 est formée par des roues libres débrayables 50 visibles sur les figures 4 et 5. De préférence, la tablette 40 comporte en outre une manette 52 de réglage d'inclinaison de la tablette 40.

Par exemple, la liaison pivot 42 est formée par deux roues libres débrayables 50 comprenant chacune un tambour 54. Chaque tambour 54 délimite en son centre un orifice 56 de réception de la tige 48 autour de laquelle est articulée la première liaison pivot 42.

Chaque tambour 54 porte un flanc 47 de la tablette 40.

Les flancs 47 de la tablette 40 sont par exemple fixés à la tablette 40 par des vis 59.

Chaque roue libre débrayable 50 comporte à l'intérieur du tambour 54 des éléments de blocage 60.

La tige 48 permet la commande simultanée des éléments de blocage 60 pour le débrayage.

Chaque élément de blocage 60 embarque des rouleaux 62.

Les éléments de blocage 60 sont par exemple solidarisés par une goupille 63.

Les pièces de fixation 49 de la tablette 40 au second support vertical 16 sont par exemple au nombre de deux et fixées de part et d'autre des roues libres débrayables 50.

La manette 52 est par exemple située d'un côté de la tige 48 à l'extérieur d'une pièce de fixation 49.

Chaque pièce de fixation 49 embarque par exemple une came 64 de blocage des rouleaux 62. Les cames 64 permettent de solidariser la tablette 40 et des parties fixes telles que les pièces de fixation 49 lors du relâchement de la manette 52.

Les roues libres débrayables 50 comprennent par exemple un organe de rappel 66 de la manette 52. L'organe de rappel 66 de la manette 52 est par exemple un ressort.

L'organe de rappel 66 de la manette 52 est par exemple maintenu par une goupille 68.

Par exemple, un second organe de rappel 72 permet un découplage des appuis des rouleaux 62 de chaque côté de la tablette 40 suivant la direction transversale Y. Le second organe de rappel 72 est par exemple un ressort.

Ainsi, la tablette 40 est inclinable à l'actionnement de la manette 52 par l'utilisateur. Dans ce cas, la tablette 40 peut prendre n'importe quelle position intermédiaire entre la position de tablette rabattue et la position d'utilisation.

Une fois le réglage d'inclinaison effectué, le relâchement de la manette 52 provoque le blocage de la tablette 40 dans la position choisie.

Il apparaît clairement que la position de la tablette peut être adaptée à la taille de l'utilisateur 12 et à la position qu'il souhaite adopter, pour lui accorder un confort optimal.

Dans un mode de réalisation préféré représenté sur les figures 3 et 5, la tablette 40 comprend en outre un support 100 embarqué sur la tablette 40, le support 100 formant un pupitre pour un accessoire de l'utilisateur, notamment un appareil électronique portable.

Le support 100 est articulé autour d'une deuxième liaison pivot 102 entre une position escamotée, comme représenté sur la figure 2, et au moins une position inclinée lorsque la tablette 40 est en position rabattue, comme représenté sur la figure 3.

Avantageusement, le support 100 présente un bord 104 de réception d'une partie inférieure de l'accessoire de l'utilisateur.

La deuxième liaison pivot 102 est articulée autour d'un deuxième axe de rotation transversal A2, le deuxième axe de rotation transversal A2 s'étendant suivant l'extrémité libre 44 de la tablette 40.

Lorsque la tablette 40 est en position rabattue, le support 100 en position escamotée s'étend entre une extrémité liée 106 à la deuxième liaison pivot 102 et une extrémité libre 108 opposée à l'extrémité liée 106 dans la direction verticale Z du côté de la face inférieure 46 de la tablette 40.

Le support 100 présente par exemple une longueur selon la direction longitudinale X comprise entre 100 et 250 mm.

Le support 100 présente par exemple une largeur selon la direction transversale Y comprise entre 150 et 350 mm.

La tablette 40 présente par exemple un évidement 110 de réception de l'extrémité liée 106 du support 100.

Par exemple, la deuxième liaison pivot 102 comporte des éléments de frottement tels que le support 100 ne peut être basculé qu'en lui appliquant un effort supérieur à un effort de frottement prédéfini. Ainsi, le support 100 est inclinable à la force de l'utilisateur, mais reste immobile lorsque des accessoires sont posés sur ce support 100. Dans ce cas, le support 100 peut prendre n'importe quelle position intermédiaire entre la position de support escamotée et la position de support inclinée.

Par exemple, le support 100 en position inclinée forme un angle compris entre 0° et 60° avec la tablette en position rabattue.

Les éléments de frottement sont par exemple des charnières à friction 112.

Les charnières à friction 112 sont par exemple au nombre de deux et reçues de part et d'autre de l'extrémité liée 106 du support 100 dans des orifices de réception 114 prévus à cet effet dans la tablette 40.

Les charnières à friction 112 sont par exemple fixées au support 100 d'une part et à la tablette 40 d'autre part par des vis de fixation 116.

Avantageusement, les charnières à friction 112 sont recouvertes sur deux côtés par des cache-charnières 118.

Il apparaît clairement que la position du support 100 peut être adaptée à la taille de l'utilisateur 12 et à la position qu'il souhaite adopter, pour lui accorder un confort optimal.

Notamment, le support 100 permet de poser un appareil électronique portable, par exemple une tablette numérique ou un téléphone portable dans une position de lecture à une hauteur adaptée aux normes ergonomiques pour la vision (EN 894-2).

Par ailleurs, le second support vertical 16 comporte avantageusement un repose-pied 200, relié par une troisième liaison pivot 202 à ce second support vertical 16, par exemple par l'intermédiaire d'un deuxième organe de guidage vertical. Ce deuxième organe de guidage est mobile le long d'une liaison glissière portée par le second support vertical 16. Cette troisième liaison pivot 202 autorise le pivotement du repose-pied 200 entre une position rétractée et une position déployée.

De préférence, des éléments de blocage, de tout type envisageable, sont également prévus pour immobiliser le repose-pieds 200 dans une position verticale choisie.

Afin d'agencer un maximum de dispositifs de confort 10 dans la salle 6, le premier support vertical 14 d'au moins un dispositif de confort 10 est confondu avec le second support vertical 16 d'un autre dispositif de confort adjacent. En d'autres termes, le premier support vertical 14 d'au moins un dispositif de confort 10 forme le second support vertical 16 de l'autre dispositif de confort adjacent.

La salle 6 définie précédemment comporte seize rangées de dispositifs de confort 10 alignés dans la direction longitudinale X, chaque rangée comprenant quatre dispositifs de confort 10 alignés dans la direction transversale Y.

Chaque rangée comporte deux paires de dispositif de confort 10 séparées par un couloir central, le couloir central présentant une largeur, prise dans la direction transversale Y, comprise entre 475 et 525 mm, par exemple sensiblement égale à 505 mm.

Il est à noter que chaque dispositif de confort présente une largeur, considérée dans la direction transversale Y, comprise entre 490 et 590 mm, par exemple sensiblement égale à 545 mm.

Il apparaît clairement que la voiture 1 selon l'invention peut comporter un grand nombre de dispositifs de confort 10, notamment soixante-quatre dispositifs de confort 10 dans l'exemple représenté, pour une voiture 1 de longueur environ égale à 17,3 mètres.

Les dispositifs de confort 10 sont en outre suffisamment confortables pour que cette augmentation de capacité d'accueil de voyageurs ne nuise sensiblement pas à leur confort.

On notera que l'invention n'est pas limitée au mode de réalisation précédemment décrit, mais pourrait présenter diverses variantes supplémentaires.

## Revendications

1. Dispositif de confort (10) pour un utilisateur, notamment destiné à équiper un véhicule de transport public, par exemple un véhicule ferroviaire, le dispositif de confort (10) comprenant une tablette (40) rabattable, articulée autour d'une première liaison pivot (42) entre une position rabattue et une position d'utilisation, la première liaison pivot (42) étant formée par des roues libres débrayables (50), **caractérisé en ce que** la tablette (40) comprend en outre un support (100) embarqué sur la tablette (40) et articulé autour d'une deuxième liaison pivot (102) entre une position escamotée et au moins une position inclinée lorsque la tablette (40) est en position rabattue, le support (40) formant un pupitre pour un accessoire de l'utilisateur, la tablette (40) en position d'utilisation s'étend dans une direction longitudinale (X) entre une extrémité liée (43) à la première liaison pivot (42) et une extrémité libre (44) opposée à l'extrémité liée (43), dans lequel la deuxième liaison pivot (102) est articulée autour d'un axe de rotation transversal (A2) suivant une direction transversale (Y) perpendiculaire à la direction longitudinale (X), l'axe de rotation (A2) s'étendant suivant l'extrémité libre (44) de la tablette (40), et dans lequel la tablette (40) comprend une face supérieure (45) destinée à recevoir un accessoire de l'utilisateur et une face inférieure (46) opposée à la face supérieure (45), et dans lequel le support (100) embarqué en position escamotée s'étend entre une extrémité liée (106) à la deuxième liaison pivot (102) et une extrémité libre (108) opposée à l'extrémité liée (106) dans une direction verticale (Z) perpendiculaire aux directions longitudinale (X) et transversale (Y) lorsque la tablette est en position rabattue, et du côté de la face inférieure (46) de la tablette (40).

2. Dispositif de confort (10) selon la revendication 1, dans lequel la tablette (40) en position d'utilisation forme un angle compris entre 0° et 110° par rapport à la tablette (40) en position rabattue.

3. Dispositif de confort (10) selon la revendication 1 ou 2, dans lequel le support (100) embarqué présente un bord (104) de réception d'une partie inférieure de l'accessoire de l'utilisateur.

4. Dispositif de confort (10) selon l'une quelconque des revendications 1 à 3, dans lequel le support (100) embarqué en position inclinée forme un angle compris entre 0° et 60° avec la tablette (40) en position rabattue.

5. Dispositif de confort (10) selon l'une quelconque des revendications 1 à 4, dans lequel la deuxième liaison pivot (102) comporte des éléments de frottement.

6. Voiture (1) de véhicule de transport public comprenant au moins un dispositif de confort (10) selon l'une quelconque des revendications précédentes.

7. Voiture (1) de véhicule de transport public selon la revendication 6, dans laquelle chaque dispositif de confort (10) comporte un premier support vertical (14) et un second support vertical (16), agencés l'un en regard de l'autre, et délimitant entre eux un espace d'accueil (18) pour un passager (12), et dans laquelle les premier (14) et second (16) supports verticaux sont montés sur un organe de guidage horizontal.

## Patentansprüche

1. Komfortvorrichtung (10) für einen Nutzer, welche insbesondere zum Einbau in ein Fahrzeug des öffentlichen Verkehrs, beispielsweise ein Schienenfahrzeug, eingerichtet ist, wobei die Komfortvorrichtung (10) eine klappbare Ablageplatte (40) aufweist, welche um ein erstes Verbindungsgelenk (42) zwischen einer Einklappstellung und einer Benutzungsstellung schwenkbar ist, wobei das erste Verbindungsgelenk (42) durch schaltbare Freiläufe (50) gebildet ist, **gekennzeichnet dadurch, dass** die Ablageplatte (40) ferner eine Abstützeinrichtung (100) aufweist, welche an der Ablageplatte (40) eingebaut ist und um ein zweites Verbindungsgelenk (102) schwenkbar ist zwischen einer versenkten Stellung und einer geneigten Stellung, wenn die Ablageplatte (40) in der Einklappstellung ist, wobei die Abstützeinrichtung (40) ein Pult für ein Accessoire des Nutzers bildet, wobei die Ablageplatte (40) in der Benutzungsstellung sich in einer Längsrichtung (X) zwischen einem mit dem ersten Verbindungsgelenk (42) verbundenen Ende (43) und einem freien Ende (44), welches dem verbundenen Ende (43) gegenüberliegt, erstreckt, wobei das zweite Verbindungsgelenk (102) um eine transversale Rotationsachse (A2), welche in einer zur Längsrichtung (X) senkrechten Querrichtung (Y) verläuft, herum schwenkbar ist, wobei die Rotationsachse (A2) sich entlang dem freien Ende (44) der Ablageplatte (40) erstreckt, und wobei die Ablageplatte (40) eine obere Fläche (45), welche dazu bestimmt ist, ein Accessoire des Nutzers zu erhalten, und eine untere Fläche (46), welche der oberen Fläche (45) gegenüberliegt, aufweist, und wobei sich die eingebaute Abstützeinrichtung (100) in der versenkten Stellung zwischen einem mit dem zweiten Verbindungsgelenk (102) verbundenen Ende (106) und einem freien Ende (108), welches dem verbundenen Ende (106) gegenüberliegt, in einer Vertikalrichtung (Z), welche senkrecht zur Querrichtung (Y) und Längsrichtung (X) ist, wenn die Ablageplatte in der Einklappstellung ist, und auf der Seite der unteren Fläche (46) der Ablageplatte (40) erstreckt.

2. Komfortvorrichtung (10) gemäß dem Anspruch 1, wobei die Ablageplatte (40) in der Benutzungsstellung einen Winkel bildet, welcher zwischen 0° und 110° bezüglich der Ablageplatte (40) in Einklappstellung liegt.

3. Komfortvorrichtung (10) gemäß dem Anspruch 1 oder 2, wobei die eingebaute Abstützeinrichtung (100) einen Rand (104) zur Aufnahme eines unteren Abschnitts des Accessoires des Nutzers aufweist.

4. Komfortvorrichtung (10) gemäß irgendeinem der Ansprüche 1 bis 3, wobei die eingebaute Abstützeinrichtung (100) in der geneigten Stellung einen Winkel bildet, welcher zwischen 0° und 60° bezüglich der Ablageplatte (40) in Einklappstellung liegt.

5. Komfortvorrichtung (10) gemäß irgendeinem der Ansprüche 1 bis 4, wobei das zweite Verbindungsgelenk (102) Reibelemente aufweist.

6. Wagen (1) eines Fahrzeugs des öffentlichen Verkehrs, aufweisend mindestens eine Komfortvorrichtung (10) gemäß irgendeinem der vorhergehenden Ansprüche.

7. Wagen (1) eines Fahrzeugs des öffentlichen Verkehrs gemäß dem Anspruch 6, wobei jede Komfortvorrichtung (10) eine erste vertikale Stütze (14) und eine zweite vertikale Stütze (16), welche einander gegenüberliegend angeordnet sind, aufweist und zwischeneinander einen Aufnahmeraum (18) für einen Passagier (12) begrenzen, und wobei die erste (14) und die zweite (16) vertikale Stütze an einer horizontalen Führungseinrichtung angebracht sind.

## Claims

1. A comfort device (10) for a user, in particular configured to equip a public transportation vehicle, for example a rail vehicle, the comfort device (10) comprising a folding tray (40), articulated around a first pivot link (42) between a folded position and a usage position, the first pivot link (42) being formed by disengageable freewheels (50), **characterized in that** the folding tray (40) further comprises a support (100) embedded on the folding tray (40) and articulated around a second pivot link (102) between a retracted position and at least one inclined position when the tray (40) is in the folded position, the support (100) forming a desk for an accessory of the user, the folding tray (40) in the usage position extending in a longitudinal direction (X) between an end (43) connected to the first pivot link (42) and a free end (44) opposite the connected end (43), wherein the second pivot link (102) is articulated about a transverse axis of rotation (A2) in a transverse direction (Y) perpendicular to the longitudinal direction (X), the axis of rotation (A2) extending along the free end (44) of the folding tray (40), and wherein the folding tray (40) comprises an upper face (45) configured to receive an accessory of the user and a lower face (46) opposite the upper face (45), and wherein the embedded support (100) in the retracted position extends between an end (106) connected to the second pivot link (102) and a free end (108) opposite the connected end (106) in a vertical direction (Z) perpendicular to the longitudinal (X) and transverse (Y) directions on the side of the lower face (46) of the tray (40).

2. The comfort device (10) according to claim 1, wherein the folding tray (40) in the usage position forms an angle of between 0° and 110° relative to the folding tray (40) in the folded position.

3. The comfort device (10) according to claim 1 or 2, wherein the embedded support (100) has an edge (104) for receiving a lower part of the accessory of the user.

4. The comfort device (10) according to any one of claims 1 to 3, wherein the embedded support (100) in the inclined position forms an angle of between 0° and 60° with the folding tray (40) in the folded position.

5. The comfort (10) according to any one of claims 1 to 4, wherein the second pivot link (102) includes friction elements.

6. A public transportation vehicle car (1) comprising at least one comfort device (10) according to any one of the preceding claims.

7. The public transportation vehicle car (1) according to claim 6, wherein the each comfort device (10) includes a first vertical support (14) and a second vertical support (16), which are arranged across from one another, and delimiting a space (18) between them for accommodating a passenger (12), and wherein the first (14) and second (16) vertical supports are mounted on a horizontal guiding member.
